(19) Europäisches Patentamt
European Patent Office
Office européen des brevets

(11) **EP 2 000 818 A1**

(12) **EUROPEAN PATENT APPLICATION**

(43) Date of publication:
**10.12.2008 Bulletin 2008/50**

(51) Int Cl.:
***G01S 5/14*** $^{(2006.01)}$

(21) Application number: **07010324.7**

(22) Date of filing: **24.05.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (71) Applicant: **ETH Zurich**<br>**8092 Zürich (CH)**<br><br>(72) Inventors:<br>• **Geiger, Alain**<br>  **8454 Buchberg (CH)**<br>• **Guillaume, Sébastien**<br>  **1788 Praz (CH)** |

(54) **System and method for determining displacements of objects**

(57)    For determining in real time displacements of an object, radio signals are received (S1) from multiple satellites of a positioning system in one receiver, fixed to the object. Determined respectively at successive epochs are single differences (A) indicative of carrier phase differences between carrier signals received from defined pairs of the satellites. Time series of the single differences are stored. For at least one epoch following the current epoch, determined are predicted single differences (C) indicative of carrier phase differences expected between carrier signals received from the defined pairs of the satellites, based on the time series of the carrier phase differences. Based on the single differences of the current epoch and the predicted single differences, determined is a displacement vector (D) indicative of a displacement of the object. Thereby, the carrier phase observations of a single receiver can be filtered such that rapid movements and/or deformations of an object in the range of a few millimetres can be detected and measured in real time, while avoiding error modelling based on estimated parameters such as precise satellites orbits, tropospheric and ionospheric models, phase centre offset variation, multipath effects, clock errors etc.

Fig. 4

## Description

Field of the Invention

The present invention relates to a system and a method for determining displacements of objects. Specifically, the present invention relates to a system and a method for determining in real time displacements of objects using radio signals received from multiple satellites of a positioning system.

Background of the Invention

The advent of the Global Positioning System (GPS) in the 1980's was a revolution in many domains, notably in geodesy. In this field, coordinates are typically determined based on carrier phase measurements. Because of systematic errors and ambiguities contained in phase measurement, it is necessary to observe the same satellites with two or more receivers simultaneously. After suitable processing, the use of multiple receivers makes it possible to determine the vector between antennas (receivers) very accurately. Precision ranges from millimetres in static mode, to centimetres in the kinematic mode, as described in Hugentobler H., Dach R., Fridez P., Meindl M., Bernese GPS Software 5.0, University of Bern, 2005; and Leick A., GPS Satellite Surveying, John Wiley, ISBN 0-471-05930-7, 2004. Another technique that uses a single receiver (to determine absolute positions with a precision of a few millimetres in static mode and a few centimetres in the kinematic one) is known as Precise Point Positioning (PPP) and is described in Shen X., Gao Y., Kinematic Processing Analysis of Carrier Phase based Precise Point Positioning, University of Calgary, 2002.
Data processing in static mode is very accurate and powerful for long duration and continuous deformations of objects, but unsuccessful for small and rapid displacements which can occur (randomly) at any moment. In fact, it is necessary to measure the same points during a few hours to obtain highly accurate and reliable positions (millimetres) in static mode. If in the kinematic mode, positions are obtained at a high sampling rate, the gain in the sampling rate leads to a loss of precision, however. In addition, the noise of the time series obtained is in the range of centimetres and remains highly coloured. Therefore, this approach is not adequate for applications requiring high accuracy.

Summary of the Invention

It is an object of this invention to provide a system and a method for determining in real time displacements of objects based on radio signals received from multiple satellites of a positioning system, which system and method do not have the disadvantages of the prior art. In particular, it is an object of the present invention to provide a system and a method for determining in real time rapid displacements, i.e. deformations and/or movements, of an object in the order of a few millimetres.
According to the present invention, these objects are achieved particularly through the features of the independent claims. In addition, further advantageous embodiments follow from the dependent claims and the description.
According to the present invention, the above-mentioned objects are particularly achieved in that, for determining in real time displacements of an object, radio signals from multiple satellites of a positioning system are received in one receiver, fixed to the object. Single differences are determined respectively at successive epochs (sampling intervals). The single differences are indicative of carrier phase differences between carrier signals received from defined pairs of the satellites. Stored are time series of the single differences determined. For at least one epoch following the current epoch, determined are predicted single differences, indicative of carrier phase differences expected between carrier signals received from the defined pairs of the satellites, based on the time series of the carrier phase differences. Based on the single differences of the current epoch and the predicted single differences, determined is a displacement vector indicative of a displacement of the object. Preferably, the predicted single differences are determined as a deterministic part, underlying the carrier phase differences, using a prediction algorithm, e.g. a Kalman Filter or a particle filter. Examples of objects include rock formations breaking off a mountain side, landslides, buildings or civil structures such as bridges exposed to earthquakes or civil engineering activities, or even mobile objects such as cars. Determining the displacement of an object based on predicted single differences and single differences of the current epoch makes it possible to filter the carrier phase observations of a single receiver such that rapid movements and/or deformations of an object in the range of a few millimetres can be detected and measured in real time and at a high sampling rate (short epochs). Thus, it is possible to avoid complex processing otherwise required for ambiguity resolution or error modelling based on estimated parameters such as precise satellites orbits, tropospheric and ionospheric models, phase centre offset variation, multipath effects, clock errors etc. The predicted single differences are determined based on the assumption that all effects affecting the carrier phase observations vary continuously and are, therefore, short time predictable. In essence, movements of the antenna engender signals in phase measurements which are detected and used to reconstruct the real displacements of objects. Compared to the conventional differential processing, no reference station is needed. Processing can be carried out at the measurement site without the need of communicating with other stations. Every satellite visible at the station can be used, since no common satellites are needed as in conventional techniques, and the precision does not depend on any baseline length. Noise is reduced to an almost white spectrum, making it easier to analyze time series for detection of movements. Furthermore, low-cost single-frequency receivers which are able to measure the carrier phase with an acquisition rate equal or higher to 10 [Hz] can be used.

In an embodiment, based on the displacement vector, a significant displacement is detected. For the significant displacement, based on the displacement vector, updated are settings used in determining the predicted single differences. By updating these settings subsequent to the detection of a significant displacement, it is possible to accelerate adaptation of the algorithm to the object displacement; thereby, accuracy is increased for predicting single differences of subsequent epochs as well as for detecting displacements continuing or occurring in the subsequent epochs. Otherwise, the algorithm for predicting single differences is biased during the time when it is adapting to the displacement.

In a further embodiment, predicted single differences are determined and stored for more than one epoch following the current epoch, and the displacement vector is determined based on the predicted single differences determined for epochs preceding the current epoch. In other words, the displacement vector is determined taking into consideration predicted single differences estimated in the past for the current epoch and for epochs preceding the current epoch. Considering past predictions makes it possible to determine with higher accuracy slow displacements which extend over several epochs and are characterised by relatively small displacement values between two successive epochs, e.g. 0.2 to 1.2mm. Otherwise, determination of the displacement in the second epoch following the displacement's beginning is possibly biased because the algorithm for predicting single differences will 'follow' the movement.

In yet a further embodiment, for determining the predicted single differences, first, an initial state is defined during an initiation phase. Thus, the algorithm for predicting single differences is initialised. During the initiation phase, a residual is computed between the single differences of the current epoch and the predicted single differences determined for the epoch preceding the current epoch. Subsequently, the displacement vector is determined considering the residual, for example, once the residual meets a defined criterion (e.g. below defined threshold), the displacement vector is defined stable enough for consideration and output.

In addition to a system and a method for determining displacements of objects, the present invention also relates to a computer program product including computer program code means for controlling one or more processors of a processing unit connected to a receiver for receiving radio signals from multiple satellites of a positioning system. The computer program code means are configured to control the processors such that the processors determine and store the single time series of single differences, determine the predicted single differences, and determine in real time the displacement vector. Particularly, the computer program product includes a computer readable medium (memory) that contains therein the computer program code means.

Brief Description of the Drawings

The present invention will be explained in more detail, by way of example, with reference to the drawings in which:

Figure 1 shows a block diagram illustrating schematically an exemplary configuration of a system for practicing embodiments of the present invention, said configuration comprising one receiver and a processing unit.

Figure 2 shows a block diagram illustrating the basic principle of a displacement of the receiver producing a range anomaly corresponding to the orthogonal projection of the displacement on the receiver-satellite direction.

Figure 3 shows two graphs, one illustrating the evolution of a carrier phase of a GPS satellite measured with a static receiver (left); the other one illustrating time series of zero-differences, showing the satellite's movement (right).

Figure 4 shows a graph and a block diagram, the block diagram illustrating a displacement of a receiver with a component along the satellite-receiver direction (right); the graph illustrating a jump in the carrier phase time series caused by the displacement.

Figure 5 shows two graphs, one illustrating a time series of a single difference estimated by collocation (above); the other one illustrating autocorrelation of the noise (below).

Figure 6 shows two graphs, one illustrating a time series of a single difference estimated without correcting a detected displacement (left); the other one illustrating the time series of the single difference estimated with correction of the detected displacement (right).

Figure 7 shows a graph illustrating multiple time step prediction for detecting slower displacements occurring over the duration of more than one epoch.

Figure 8 shows a flow diagram illustrating an example of a sequence of steps executed according to the present invention for determining in real time displacements of objects.

Figure 9 shows a flow diagram illustrating an example of a sequence of steps executed according to the present invention for computing single differences.

Figure 10 shows a flow diagram illustrating an example of a sequence of steps executed according to the present invention for initialising the prediction algorithm and for estimating predicted single differences.

Figure 11 shows a flow diagram illustrating an example of a sequence of steps executed according to the present invention for determining a displacement vector.

Figure 12 shows a flow diagram illustrating an example of a sequence of steps executed according to the present invention for detecting and indicating a significant displacement.

Detailed Description of the Preferred Embodiments

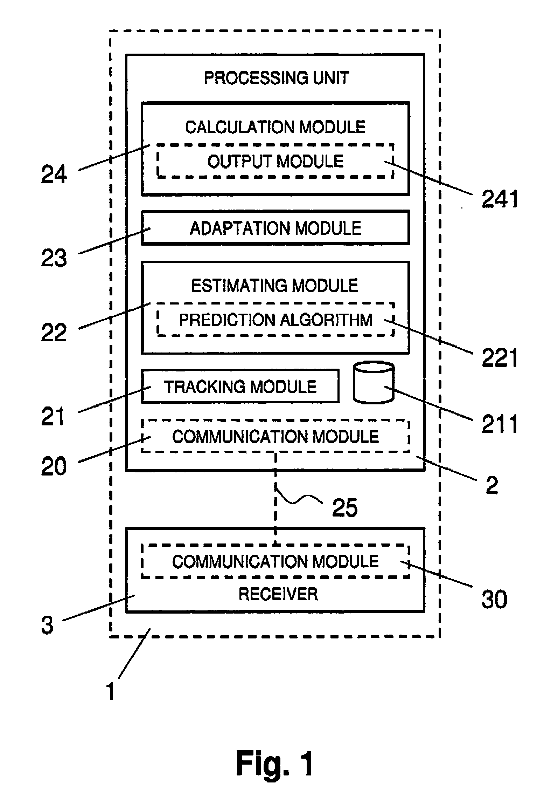

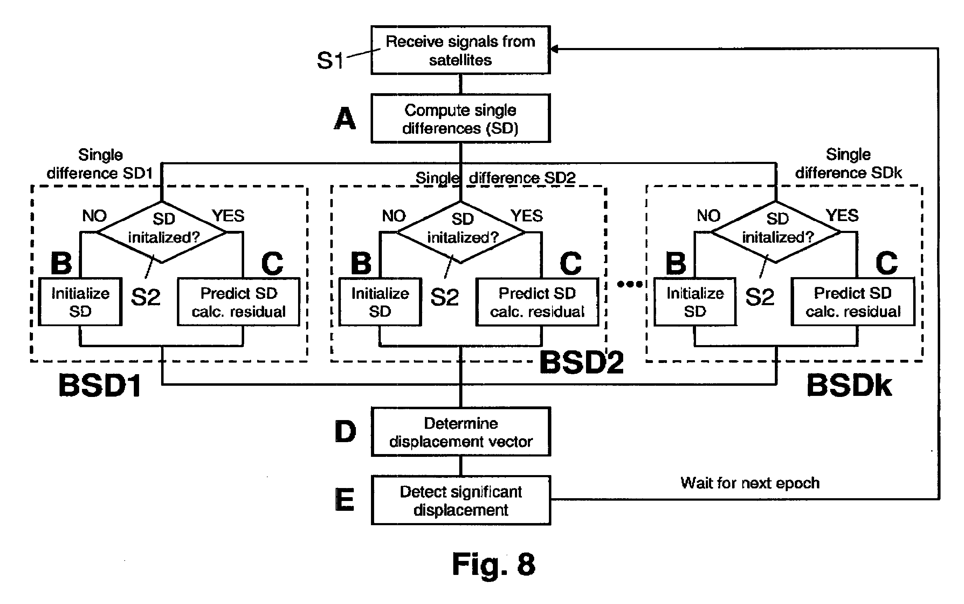

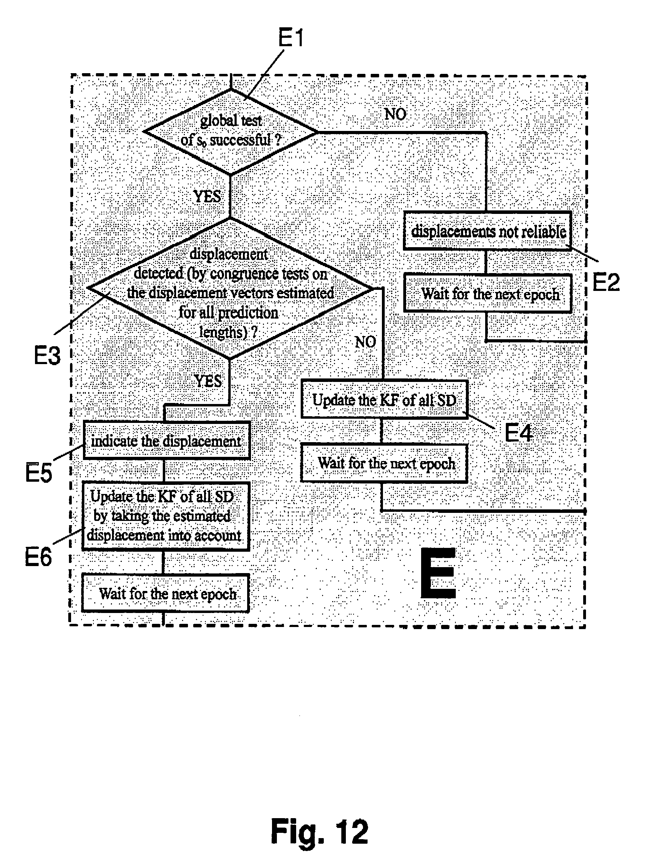

In Figure 1, reference numeral 1 refers to a system for determining displacements of objects. As illustrated schematically in Figure 1, the system 1 comprises one single receiver 3 for receiving radio signals from multiple satellites SAT1, SAT2, SAT3 of a positioning system, particularly a satellite navigation system with global coverage such as GPS. Furthermore, the system 1 comprises a processing unit 2 with several functional modules, namely a tracking module 21, an estimating module 22, an adaptation module 23, a calculation module 24 with an output module 241, and an optional communication module 20. Preferably, the functional modules are implemented as programmed software modules. The computer program code of the software modules is stored in a computer program product, i.e. in a computer readable medium, either in memory integrated in the processing unit 2 or on a data carrier that can be inserted into the processing unit 2. The computer program code of the software modules controls one or more processors of the processing unit 2 so that the data processing unit 2 executes various functions described later in more detail with reference to Figures 8 to 12.

Depending on the embodiment, the receiver 3 and the processing unit 2 are implemented as one device with a common housing or as separate devices interconnected via an optional wired or wireless data communication link 25. The communication module 20 is configured to exchange data with a corresponding communication module 30 of the receiver 3 via the data communication link.

As illustrated in Figure 1, the calculation module 24 includes an output module 241 for generating output signals. Depending on the embodiment, output signals are provided on a display or a printer as visual output, or in a data store or on a data communication link as electronic data output.

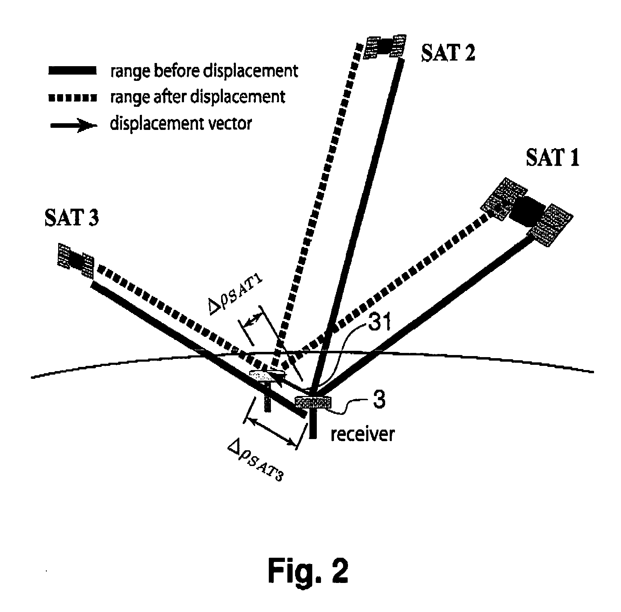

Basically, GPS is based on differences of range measurements between satellites SAT1, SAT2, SAT3 and receiver 3. Assuming that the positions of the satellites SAT1, SAT2, SAT3 and the receiver 3 are known, the theoretical distance to each satellite SAT1, SAT2, SAT3 should be equal to the measured range provided all error sources are negligible. As illustrated in Figure 2, a displacement 31 of the receiver 3 or its antenna, respectively, produces a range anomaly equal to the orthogonal projection $\Delta\rho_{SAT3}$, $\Delta\rho_{SAT1}$ of the displacement 31 on the receiver-satellite direction. In the example shown, only the ranges on satellite SAT1 and SAT3 are influenced by the displacement. The range of the satellite SAT2 is invariant because its direction is perpendicular to the displacement.

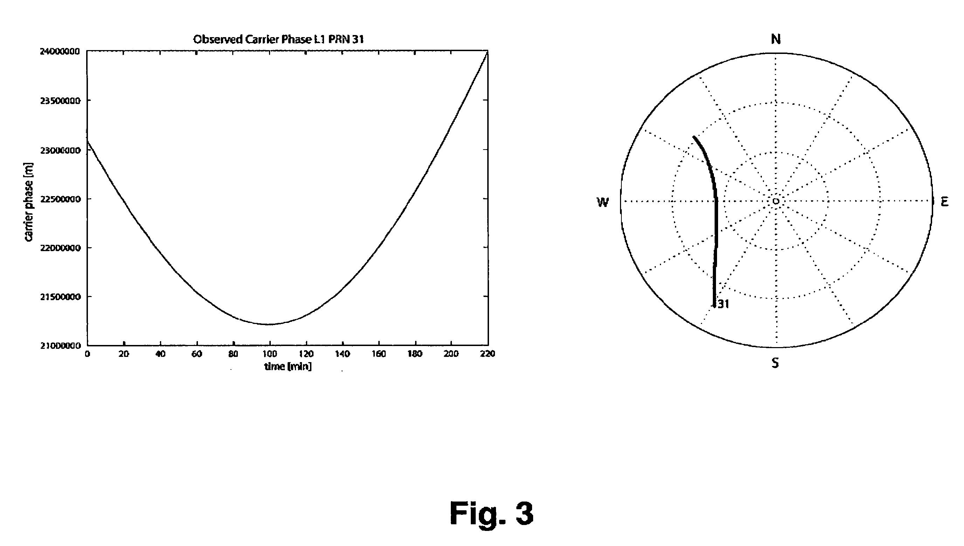

As illustrated in Figure 3, carrier phase measurements show a time-dependent variation which is mainly due to the satellites' movements along their orbits. Figure 3 shows (on the left) the evolution of the carrier phase L1 [m] measured at ETH Hoenggerberg, Switzerland, on the GPS satellite PRN 31 during 3h 40min with a static receiver (Leica 500). The time series of zero-differences (on the right), look very regular at this scale and, basically, show the satellite's movement. There are numerous further effects that also impact the measurements, e.g. change of the slant path delay. However, at a sub-second resolution these time varying effects may be considered slow.

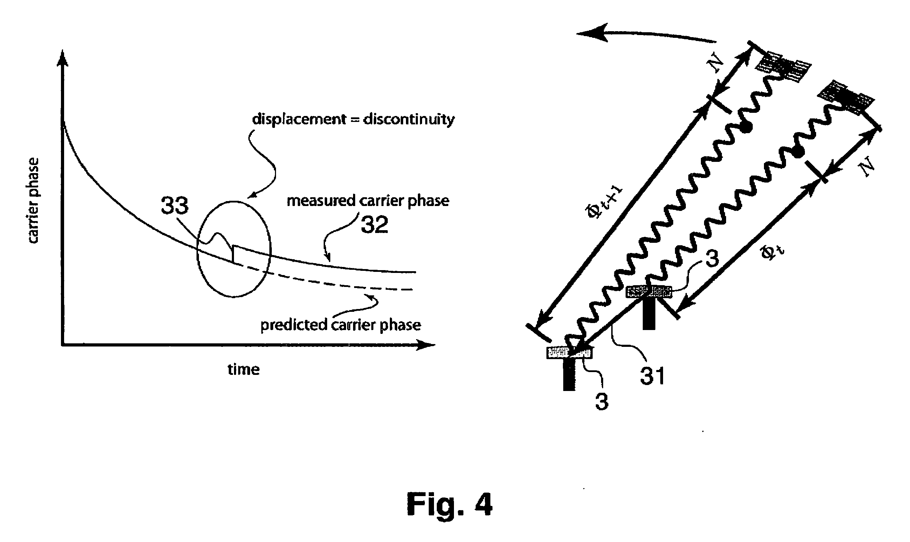

Figure 4 illustrates the impact of a rapid displacement 31 of the receiver 3 (or its antenna, respectively) on the measured carrier phase 32. As can be seen in Figure 4, if a displacement 31 occurs between two epochs in the satellite-receiver direction, the corresponding carrier phase time series contains a discontinuity 33 - or a jump - identical to the displacement.

In the following paragraphs, described is the method of predicting and filtering the deterministically varying component of the carrier phase in order to determine displacements of the receiver 3. Because the receiver clock error has a significant effect on the regularity of the time series (generating quasi unpredictable jumps), tracking is performed on carrier phase differences between two different satellites SAT1, SAT2, SAT3 (single difference), thus, the receiver clock error is eliminated completely.

The fundamental carrier phase zero-difference observation equation for the carrier signal L1 is:

$$\Phi^i(t) + \epsilon^i(t) = \lambda\phi^i(t) + \epsilon(t) = \rho^i(t) - \lambda N^i + c[\delta T(t) - \delta t^i(t)] + d^i_{trop}(t) - d^i_{ion}(t) + d^i_{mult}(t) \quad (1)$$

with the effect of a displacement d added:

$$\Phi^i(t) + \epsilon^i(t) = -\vec{d}(t) \cdot \vec{e}_i(t) + \rho^i(t) - \lambda N^i + c[\delta T(t) - \delta t^i(t)] + d^i_{trop}(t) - d^i_{ion}(t) + d^i_{mult}(t) \quad (2)$$

and forming the single difference between the satellites *i* and *j* as outlined in equation (3):

$$\nabla\Phi^{ij}(t) + \nabla\epsilon^{ij}(t) = -\vec{d}(t) \cdot [\vec{e}_i(t) - \vec{e}_j(t)] + \underbrace{\nabla\rho^{ij}(t) - \lambda\nabla N^{ij} - c\nabla\delta t^{ij}(t) + \nabla d^{ij}_{trop}(t) - \nabla d^{ij}_{ion}(t) + \nabla d^{ij}_{mult}(t)}_{=f_k(t)}$$

where:

| | |
|---|---|
| *i,j* = | satellite *i* respectively *j*. |
| *t* = | OPS time [sec]. |
| $\Phi$ = | carrier phase received [m]. |
| $\phi$ = | carrier phase received [cycles]. |
| $\lambda$ = | wavelength of L1 [m]. |
| $\rho$ = | geometrical range between the receiver and a satellite [m]. |
| *N* = | carrier ambiguity [cycles (integer)]. |
| *c* = | speed of light in vacuum $[\frac{m}{sec}]$. |
| $\delta T$ = | receiver clock bias [s]. |
| $\delta t$ = | satellite clock bias [s]. |
| $d_{trop}$ = | tropospheric delay [m]. |
| $d_{iono}$ = | ionospheric effect [m]. |
| $d_{mult}$ = | multipath effect [m]. |
| $\vec{d}$ = | displacement vector [m]. |
| $\vec{e}$ = | receiver $\rightarrow$ satellite unit vector [-]. |
| $\epsilon$ = | carrier phase random noise [m]. |
| $\nabla.^{ij}$ = | $.^i - .^j$, symbol for the single difference between satellites *i* and *j*. |
| $f_k$ = | displacement-free single difference *k* carrier phase function [m]. |

Without displacement, the function $f_k(t)$ is equal to the observed single difference $\nabla\Phi^{ij}(t)$. By tracking and predicting this function for the next (subsequent) epochs, it is possible to detect and determine a possible movement of the receiver 3. Therefore, the quality of determining $f_k(t)$ is crucial for the successful prediction of unbiased single differences. The prediction algorithm must in run real time and adapt itself automatically to the varying non-stationary properties of the tracked signal. Possible prediction algorithms include the Kalman Filter or a particle filter. The Kalman Filter is well suited for coupling a dynamic model and an observation model with adapting stochastic properties. Generally, the Kalman Filter is the least square solution of the system of equation, as described in Gelb A., Applied Optimal Estimation, ISBN 0-262-20027-9, 1988:

$$\begin{cases} \dot{\vec{x}}(t) = F(t)\vec{x}(t) + L(t)\vec{u}(t) + G(t)\vec{w}(t) & where: \quad \vec{w}(t) \sim N(0, Q(t)) \\ \vec{z}(t) = H(t)\vec{x}(t) + \vec{v}(t) & where: \quad \vec{v}(t) \sim N(0, R(t)) \end{cases} \quad (4)$$

where:

$\vec{x}(t) =$      the state vector.

$F(t) =$      matrix of homogeneous part of the differential system equation.

$u(t) =$      control input vector.

$L(t) =$      input coupling matrix.

$\vec{w}(t) =$      Gaussian random white noise of the dynamic system characterised by the covariance matrix $Q(t)$.

$G(t) =$      matrix of the system noise coupling.

$\vec{x}(t) =$      observation vector.

$H(t) =$      observation matrix.

$\vec{v}(t) =$      Gaussian random white noise of the observations characterised by the covariance matrix $R(t)$.

For the present application, the different parameters of this system for the single difference k are:

$$\vec{x}(t) = \begin{pmatrix} f_k(t) \\ \dot{f}_k(t) \\ \ddot{f}_k(t) \\ \dddot{f}_k(t) \end{pmatrix}; \quad F(t) = \begin{pmatrix} 0 & 1 & 0 & 0 \\ 0 & 0 & 1 & 0 \\ 0 & 0 & 0 & 1 \\ 0 & 0 & 0 & 0 \end{pmatrix}; \quad u(t) = 0; \quad L(t) = 0; \quad G(t) = \begin{pmatrix} 1 & 0 & 0 & 0 \\ 0 & 1 & 0 & 0 \\ 0 & 0 & 1 & 0 \\ 0 & 0 & 0 & 1 \end{pmatrix}$$

$$\vec{z}(t) = \begin{pmatrix} \nabla\Phi^{ij}(t) \\ -\nabla\dot{\Phi}^{ij}(t) \end{pmatrix}; \quad H(t) = \begin{pmatrix} 1 & 0 & 0 & 0 \\ 0 & 1 & 0 & 0 \end{pmatrix}$$

Where $\Phi$ is the observed Doppler converted in $[\dfrac{mm}{sec}]$.

The stochastic model for the observations represented by the matrix $R(t)$ is a diagonal matrix with 2mm and $30\dfrac{mm}{sec}$ standard deviation for the single difference and the Doppler measurements, respectively.

The system noise characterised by the covariance matrix $Q(t)$ is estimated empirically for each single difference k in the initialisation process of the filter (prediction algorithm). To obtain this covariance matrix, a collocational model is adjusted over an initialisation time (~30sec) thus, estimating $f_k(t)$ in an optimal way and whitening the residual noise. Then, at each initialisation epoch, the state vector is computed, on one hand through numerical derivation of the collocated function, and, on the other hand, through the step by step resolution of the dynamic system (4). Finally, $Q(t)$ can be estimated with these two states series.

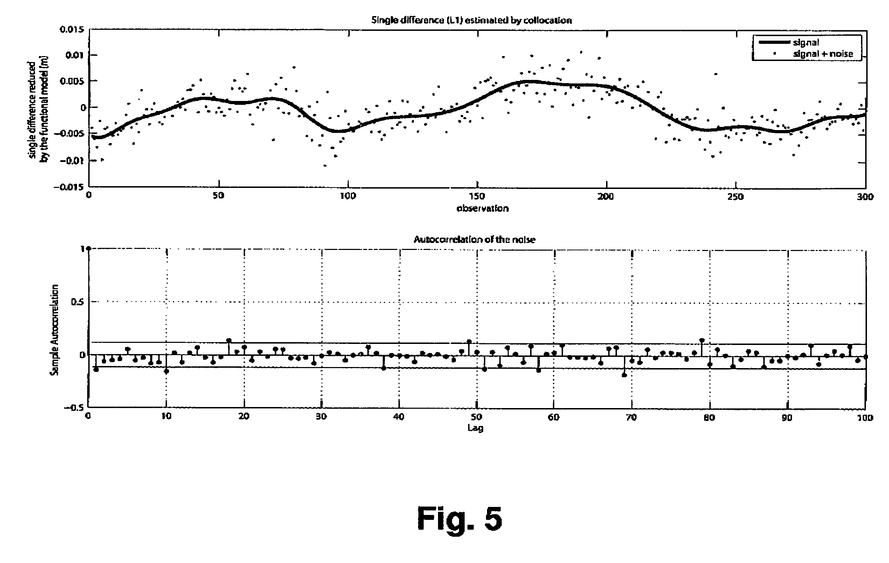

Figure 5 illustrates the collocation of a single difference time series of 30sec (carrier phase observations acquired at 10Hz). The covariance function is adapted to obtain a white residual noise. Only the signal and the noise components are shown (above). The autocorrelation function proves that the residual noise is close to a white noise process (below). The standard deviation of the noise is 2.5mm, corresponding to the expected precision of the carrier phase measurements (1-2% of A).

After the initialisation and the system identification process, all available single differences are tracked and it is assumed that all $f_k(t)$ are known. From equation (3):

$$\nabla\Phi^{ij}(t) + \nabla\epsilon^{ij}(t) = -\vec{d}(t) \cdot [\vec{e_i}(t) - \vec{e_j}(t)] + f_k(t) \tag{5}$$

where:

$\nabla\Phi^{ij} =$      the single difference computed with the incoming observations.

$f_k =$      the unbiased single differences estimated with the Kalman Filter.

$\nabla\epsilon^{ij} =$      the correlated noise.

$\vec{d} =$      the unknown displacement vector.

$\vec{e_i}, \vec{e_j} =$      the receiver $\rightarrow$ satellite $i,j$ unit vectors calculated by

the approximate receiver coordinates and the satellite ephemeris.

By rewriting (5)

$$l_k + v_k = A_k x \qquad \text{where}: \begin{array}{l} l_k = \nabla\Phi^{ij}(t) - f_k(t); \qquad v_k = \nabla\epsilon^{ij}(t) \\[6pt] A_k = -[\vec{e_i}(t) - \vec{e_j}(t)]^T; \quad x = \vec{d}(t) \end{array} \qquad (6)$$

With all available single differences, the system becomes:

$$l + v = Ax \qquad \text{with}: \qquad l = \begin{pmatrix} l_1 \\ \vdots \\ l_k \\ \vdots \\ l_n \end{pmatrix}; \qquad v = \begin{pmatrix} v_1 \\ \vdots \\ v_k \\ \vdots \\ v_n \end{pmatrix}; \qquad A = \begin{pmatrix} A_1 \\ \vdots \\ A_k \\ \vdots \\ A_n \end{pmatrix} \qquad (7)$$

The covariance matrix $\sigma_0^2 Q_{ll}$ is computed by taking into account the correlation due to forming the single differences. If $v$ is a Gaussian random vector, the maximum likelihood estimator of this linear system is :

$$\hat{x} = (A^T Q_{ll}^{-1} A)^{-1} A^T Q_{ll}^{-1} l \qquad (8)$$

A displacement is detected as significant, if both the global test of the estimation and the non-zero displacement hypothesis test (congruence test) at a chosen confidence level are successful, as described, for example, in Welsch W., Heunecke O., Kuhlmann H., Auswertung geodätischer Ueberwachungsmessungen, Herbert Wichmann Verlag, ISBN 3-87907-295-7, 2000.

Providing the real-time algorithm described above with an update at each epoch and a prediction of one time step makes it possible to determine, without biases, a movement that occurs between two epochs. On the other hand, displacements directly following are not detected in a clean fashion, because the filters (prediction algorithm) must adjust themselves with a certain slowness. To limit this effect, if a displacement is detected as significant, the filters are corrected with the estimated displacement, projected on the corresponding single difference vector.

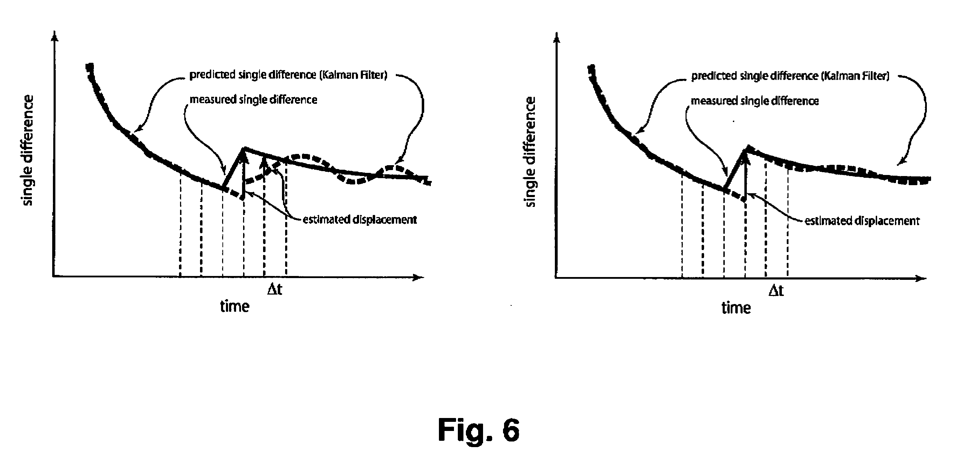

Figure 6 illustrates the behaviour of a Kalman Filter when a displacement of the receiver 3 occurs. As is shown on the left hand side, when updated conventionally, the filter requires a considerable amount of time for adapting itself, after a displacement occurred. However, as shown on the right hand side, the adaptation time is reduced when the settings of the filter are corrected with the estimated displacement (one epoch corresponds to a sampling interval of $\Delta t$).

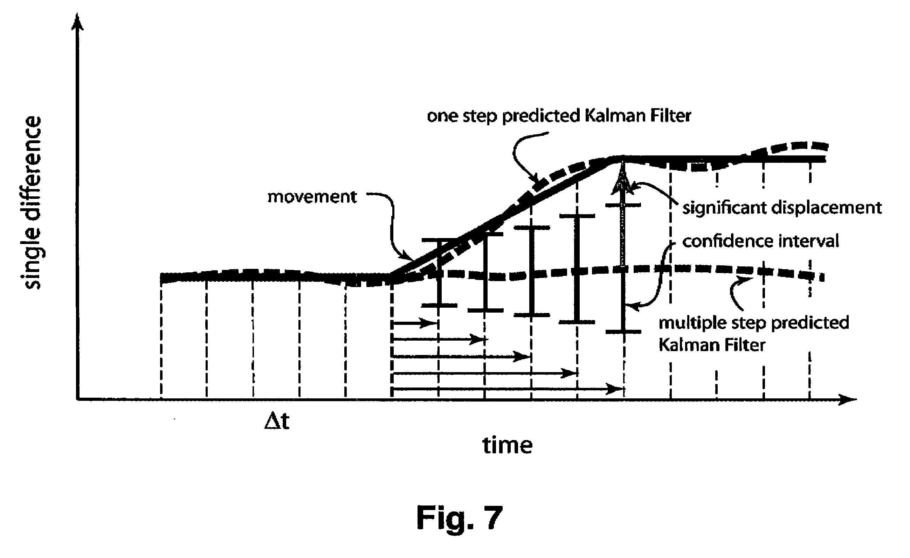

Figure 7 illustrates the effect of a multiple time step prediction for detecting slow displacements that extend over several epochs (multiple $\Delta t$). If a displacement extends over several epochs, its determination from the second step after the beginning can be biased, if the movement between two epochs is too small. In fact, the filter will 'follow' the movement. To determine slower movements which extend over several epochs, $f_k(t)$ is predicted for a corresponding longer term without loosing accuracy. Then, at each time step (epoch) the displacement vector is estimated with the predicted state from the previous epochs. A congruence test is done on the displacements from all predicted time steps.

In the following paragraphs, described with reference to Figures 8 to 12 is an exemplary sequence of steps performed for determining in real time displacements of an object based on radio signals received from multiple satellites SAT1, SAT2, SAT3 of a positioning system.

As illustrated in Figure 8, in step S1, the receiver 3 receives from a plurality of satellites SAT1, SAT2, SAT3 (L1) carrier signals associated with an epoch (sampling interval $\Delta t$). In block A, the tracking module 21 computes and stores the single differences between the carrier phases of pairs of the satellites SAT1, SAT2, SAT3 (e.g. for single difference SD1, the carrier phase difference of $Sat_2$-$Sat_1$ is computed; for SD2, $Sat_3$-$Sat_2$; for SDk, $Sat_k$-$Sat_{k-1}$). In blocks BSD1, BSD2 to BSDk, the single phase differences SD1, SD2 to SDk are being tracked respectively. In step S2, tracking module 21 determines whether or not the estimating module 22 is initialised for the respective single difference SD1, SD2 to SDk. If the estimating module 22 is not yet initialised, in block B, an initialisation process is performed for the estimating module 22 based on the respective single difference SD1, SD2 to SDk. Otherwise, if the estimating module 22 is initialised for the respective single difference SD1, SD2 to SDk, in block C, the estimating module 22 determines predicted single differences as well as residuals for the respective single difference SD1, SD2 to SDk. In block D, the calculation module 24 determines a displacement vector and associated displacement residuals. In block E, the adaptation module 23 performs statistical tests for detecting a significant displacement. Subsequently, after waiting for the next epoch, processing continues in step S1 with the receiver 3 receiving from the satellites SAT1, SAT2, SAT3 the carrier signals of the next epoch (i+1, following the current epoch i).

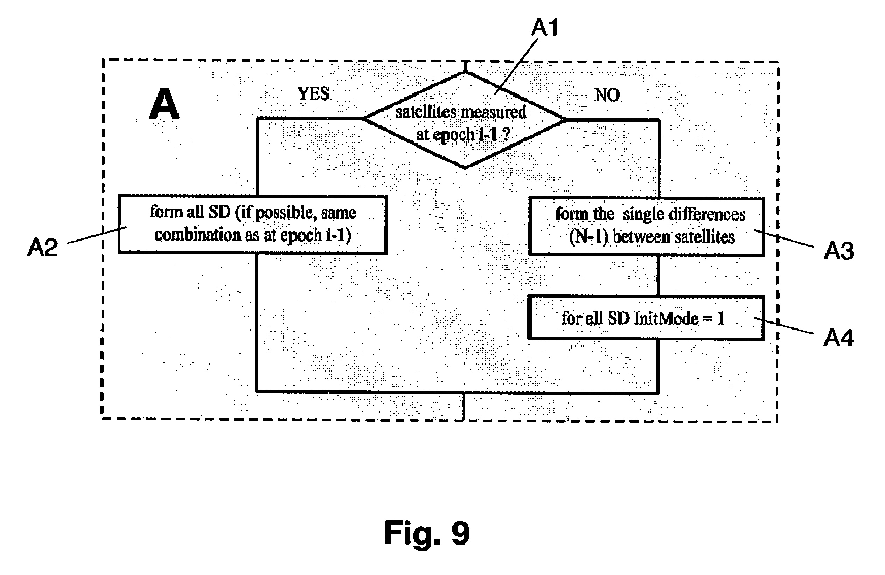

As illustrated in Figure 9, for computing the carrier phase single differences, in step A1, the tracking module 21 determines whether or not the satellites SAT1, SAT2, SAT3 were measured in the previous epoch (i-1). If the satellites SAT1, SAT2, SAT3 were measured, the tracking module 21 computes and stores in data store 211 the single differences, preferably, for the same combination of pairs of satellites as in the previous epoch (i-1). Otherwise, the single differences (N-1) are formed between the satellites in step A3, and for all the single differences, an initialisation state is set to InitMode=1.

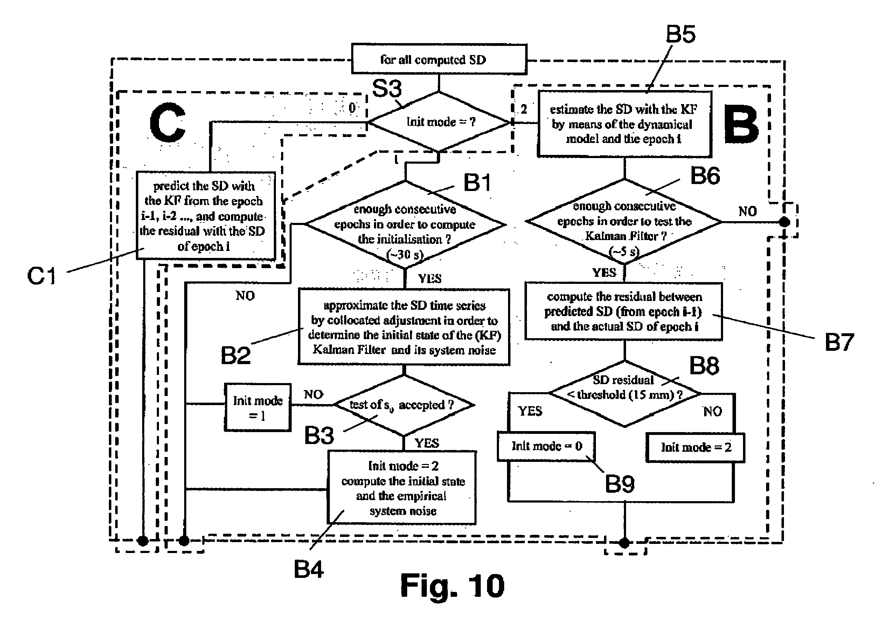

As illustrated in Figure 10, in step S3, the tracking module 21 checks the initialisation state associated with each of the computed and stored carrier phase single differences. If the initialisation state associated with the respective single difference is InitMode=0, in step C1, the estimating module 22, using the prediction algorithm 221 (e.g. the Kalman Filter) as initialised in preceding epochs (i-1, i-2, ...}, determines the predicted single difference and computes the residual with respect to the current value of the respective single difference (epoch i) as outlined in equation (4). Otherwise, if the initialisation state is InitMode=1 or InitMode=2, the initialisation process is performed in block B.

If the initialisation state is InitMode=1, the tracking module 21 checks in step B1 whether or not, for computing the initialisation, enough consecutive epochs have been tracked for the respective single difference (e.g. 30 seconds). If there are not enough epochs, processing continues in step S3 for the remaining single differences or in block D, respectively. Otherwise, if there are enough consecutive epochs, in step B2, the estimating module 22 approximates the time series of the respective single difference by collocated adjustment in order to determine the initial state of the prediction algorithm 221, e.g. the initial state of the Kalman Filter and its system noise. If it is determined in step B3, that the statistical test of the a posteriori standard deviation of the residuals is accepted, the initialisation state remains in InitMode=1. Otherwise, the initial state and the empirical system noise are computed, and the initialisation state is set to InitMode=2. Processing continues in step S3 for the remaining single differences or in block D, respectively.

If the initialisation state is InitMode=2, in step B5, the estimating module 22 estimates the expected single difference using the prediction algorithm 221, e.g. the Kalman Filter. Subsequently, in step B6, the estimating module 22 checks whether or not, for testing the prediction algorithm 221, e.g. the Kalman Filter, enough consecutive epochs have been tracked for the respective single difference (e.g. 5 seconds). If there are not enough epochs, processing continues in step S3 for the remaining single differences or in block D, respectively. Otherwise, if there are enough consecutive epochs, in step B7, the estimating module 22 computes the residual between the predicted single difference from the previous epoch (i-1) and the current single difference (epoch i) as outlined in equation (5). If the estimating module 22 determines in step B8 that the residual is below a defined threshold, e.g. 15mm, the initialisation state is set to InitMode=0 in step B9; otherwise, the initialisation state remains InitMode= 2. Processing continues in step S3 for the remaining single differences or in block D, respectively.

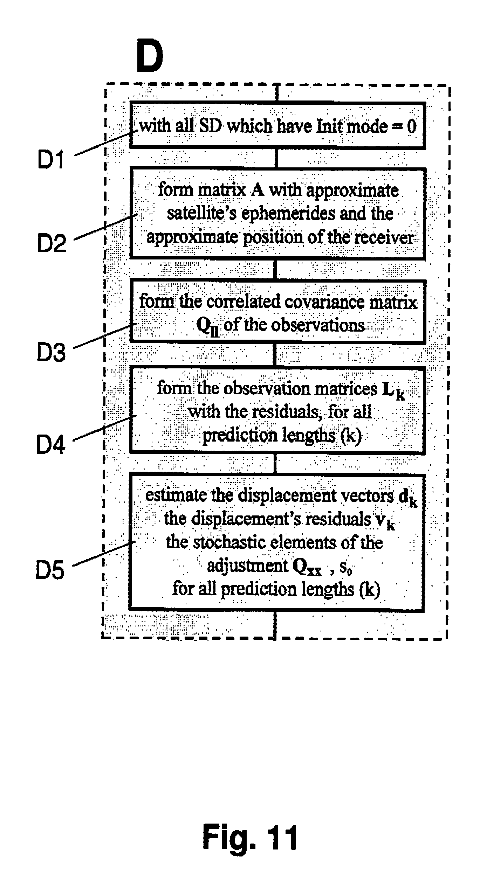

As illustrated in Figure 11, in step D1, all single differences having an initialisation state of InitMode=0 are determined for further processing in block D. In step D2, as outlined in equation (6), the calculation module 24 forms matrix A based on approximate positions of the satellites SAT 1, SAT2, SAT3 (ephemerides) and the approximate position of the receiver 3. In step D3, the calculation module 24 forms the correlated covariance matrix $Q_{ll}$ of the observations. In step D4, for multiple time step prediction, the calculation module 24 forms for all prediction lengths (k) the observation matrices $L_k$ based on the residuals. Subsequently, in step D5, as outlined in equation (8), the calculation module 24 determines the displacement vector $d_k$, the displacement residuals $v_k$, the stochastic elements of the adjustment $Q_{xx}$, and a posteriori standard deviation of the residuals so for all prediction lengths (k).

In step E1, the calculation module 24 determines whether or not the global test (chi-square test) of the a posteriori standard deviation of the residuals so is successful. If the global test is not successful, in step E2, the displacements are defined not reliable and processing continues in step S1 with the receiver 3 receiving from the satellites SAT1, SAT2, SAT3 the carrier signals of the next epoch. Otherwise, if the global test is successful, in step B3, adaptation module 23 checks whether or not a (significant) displacement was detected, by performing congruence tests on the displacement vectors estimated for all prediction lengths (k). If no displacement was detected, the prediction algorithm 221, e.g. the Kalman Filer, is updated for all single differences in step E4 and processing continues in step S1 with the carrier signals of the next epoch. Otherwise, if a (significant) displacement was detected, in step E5, the output module 241 generates an output signal indicative of the value of the detected displacement. Furthermore, in step E6, the adaptation module 23 updates the prediction algorithm 221, e.g. the Kalman Filer, for all single differences, taking into consideration the detected displacement. Subsequently, processing continues in step S1 with the carrier signals of the next epoch.

The proposed method and system make it possible to detect small and rapid movements in real-time with a single GPS carrier phase receiver. Tests have shown, that the precision and the reliability of the system strongly depend on the constellation of satellites. Nevertheless, in good conditions, rapid movements above 5mm in the horizontal direction and 10mm in the vertical direction (height) can be detected instantaneously as significant (95%).

The proposed system and method can be used, for example, as a prefilter for a conventional static measurement. In fact, small and rapid movements, which are not detectable by the standard differential algorithms, can be determined and taken into account, or short term antenna stabilities can be assessed. However, the preferred applications are in real-time detection of small, rapid and hazardous movements within a controlling network. Such movements occur during earthquakes or as precursors of landslides or due to civil engineering activities, for example.

The foregoing disclosure of the embodiments of the invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents. Specifically, in the description, the computer program code has been associated with specific software modules, one skilled in the art will understand, however, that the computer program code may be structured differently, without deviating from the scope of the invention. Furthermore, the particular order of the steps set forth in the specification should not be construed as limitations on the claims; one skilled in the art will understand that different sequences of steps are possible without deviating from the scope of the invention.

## Claims

1. A system (1) for determining in real time displacements (31) of objects, the system (1) comprising:

    one receiver (3) configured to receive radio signals from multiple satellites (SAT1, SAT2, SAT3) of a positioning system;
    a tracking module configured to determine respectively at successive epochs single differences indicative of carrier phase differences between carrier signals received from defined pairs of the satellites (SAT1, SAT2, SAT3), and to store time series of these single differences;
    an estimating module (22) configured to determine based on the time series of the single differences, for at least one epoch following the current epoch, predicted single differences indicative of carrier phase differences expected between carrier signals received from the defined pairs of the satellites (SAT1, SAT2, SAT3); and
    a calculation module (24) configured to determine a displacement vector indicative of a displacement (31) of an object fixed to the receiver (3) based on the single differences of the current epoch and the predicted single differences.

2. The system (1) according to claim 1, further comprising an adaptation module (23) configured to detect a significant displacement (31) based on the displacement vector, and to update, for the significant displacement (31), settings of the estimating module (22) based on the displacement vector.

3. The system (1) according to one of claims 1 or 2, wherein the estimating module (22) is further configured to determine and store the predicted single differences for more than one epoch following the current epoch; and the calculation module (24) is further configured to determine the displacement vector based on the predicted single differences determined for epochs preceding the current epoch.

4. The system (1) according to one of claims 1 to 3, wherein the estimating module (22) is further configured to define its initial state during an initiation phase, to compute during the initiation phase a residual between the single differences of the current epoch and the predicted single differences determined for the epoch preceding the current epoch, and to determine the displacement vector considering the residual.

5. The system (1) according to one of claims 1 to 4, wherein the estimating module (22) comprises a prediction algorithm (221), and is configured to determine the predicted single differences as a deterministic part, underlying the carrier phase differences, using the prediction algorithm (221).

**6.** A method of determining in real time displacements (31) of an object, the method comprising:

receiving (S1) in one receiver (3), fixed to the object, radio signals from multiple satellites (SAT1, SAT2, SAT3) of a positioning system;

determining respectively at successive epochs single differences (A) indicative of carrier phase differences between carrier signals received from defined pairs of the satellites (SAT1, SAT2, SAT3);

storing time series of the single differences determined;

determining based on the time series of the carrier phase differences, for at least one epoch following the current epoch, predicted single differences (C) indicative of carrier phase differences expected between carrier signals received from the defined pairs of the satellites (SAT1, SAT2, SAT3); and

determining a displacement vector (D) indicative of a displacement (31) of the object based on the single differences of the current epoch and the predicted single differences.

**7.** The method according to claim 6, further comprising detecting (E) a significant displacement (31) based on the displacement vector; and updating (E6) based on the displacement vector, for the significant displacement (31), settings used in determining the predicted single differences.

**8.** The method according to one of claims 6 or 7, wherein determining the predicted single differences (C) includes determining and storing the predicted single differences for more than one epoch following the current epoch; and determining the displacement vector (D) is based on the predicted single differences determined for epochs preceding the current epoch.

**9.** The method according to one of claims 1 to 8, wherein determining the predicted single differences (C) includes defining an initial state during an initiation phase, computing during the initiation phase a residual (B7) between the single differences of the current epoch and the predicted single differences determined for the epoch preceding the current epoch, and determining the displacement vector (D) considering the residual.

**10.** The method according to one of claims 1 to 4, wherein the predicted single differences are determined (C) as a deterministic part, underlying the carrier phase differences, using a prediction algorithm (221).

**11.** A computer program product comprising computer program code means for controlling one or more processors of a processing unit connected to a receiver (3) for receiving radio signals from multiple satellites (SAT1, SAT2, SAT3) of a positioning system, such that the processors

determine respectively at successive epochs single differences (A) indicative of carrier phase differences between carrier signals received from defined pairs of the satellites (SAT1, SAT2, SAT3);

store time series of the single differences determined;

determine based on the time series of the carrier phase differences, for at least one epoch following the current epoch, predicted single differences (C) indicative of carrier phase differences expected between carrier signals received from the defined pairs of the satellites (SAT1, SAT2, SAT3); and

determine in real time a displacement vector (D), indicative of a displacement (31) of an object fixed to the receiver (3), based on the single differences of the current epoch and the predicted single differences.

**12.** The computer program product according to claim 11, comprising further computer program code means for controlling the processors, such that the processors detect (E) a significant displacement (31) based on the displacement vector; and updates (E6) , for the significant displacement (31), settings used in determining the predicted single differences, based on the displacement vector.

**13.** The computer program product according to one of claims 11 or 12, comprising further computer program code means for controlling the processors, such that the processors determines and stores the predicted single differences (C) for more than one epoch following the current epoch; and determines the displacement vector (D) based on the predicted single differences determined for epochs preceding the current epoch.

**14.** The computer program product according to one of claims 11 to 13, comprising further computer program code means for controlling the processors, such that the processors, for determining the predicted single differences (C), define an initial state during an initiation phase, compute during the initiation phase a residual (B7) between the single differences of the current epoch and the predicted single differences determined for the epoch preceding the current epoch, and determine the displacement vector (D) considering the residual.

**15.** The computer program product according to one of claims 11 to 14, comprising further computer program code means for controlling the processors, such that the processors determine the predicted single differences (C) as a deterministic part, underlying the carrier phase differences, using a prediction algorithm (221).

PROCESSING UNIT

CALCULATION MODULE

OUTPUT MODULE

24

241

ADAPTATION MODULE

23

ESTIMATING MODULE

PREDICTION ALGORITHM

22

221

TRACKING MODULE

21

211

COMMUNICATION MODULE

20

2

25

COMMUNICATION MODULE

RECEIVER

30

3

1

**Fig. 1**

range before displacement
range after displacement
displacement vector

SAT 2

SAT 1

SAT 3

$\Delta\rho_{SAT1}$

31

3

receiver

$\Delta\rho_{SAT3}$

**Fig. 2**

**Fig. 3**

**Fig. 4**

**Fig. 5**

EP 2 000 818 A1

**Fig. 6**

EP 2 000 818 A1

**Fig. 7**

Fig. 8

EP 2 000 818 A1

**Fig. 9**

**Fig. 10**

EP 2 000 818 A1

**D**

D1 — with all SD which have Init mode = 0

D2 — form matrix **A** with approximate satellite's ephemerides and the approximate position of the receiver

D3 — form the correlated covariance matrix $Q_{ll}$ of the observations

D4 — form the observation matrices $L_k$ with the residuals, for all prediction lengths (k)

D5 — estimate the displacement vectors $d_k$ the displacement's residuals $v_k$ the stochastic elements of the adjustment $Q_{xx}$ , $s_0$ for all prediction lengths (k)

**Fig. 11**

E1

global test
of $s_0$ successful ?

NO

YES

displacement
detected (by congruence tests on
the displacement vectors estimated
for all prediction
lengths) ?

E3

YES

NO

displacements not reliable

Wait for the next epoch

E2

Update the KF of all SD

E4

Wait for the next epoch

indicate the displacement

E5

Update the KF of all SD
by taking the estimated
displacement into account

E6

Wait for the next epoch

E

**Fig. 12**

**European Patent Office**

**EUROPEAN SEARCH REPORT**

Application Number

EP 07 01 0324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 366 854 B1 (TSUCHIYA ATSUSHI [JP] ET AL) 2 April 2002 (2002-04-02) fig. 1 and 11 c. 7, l. 54-58 c. 9, l. 18-29 and l. 33-34 c. 10, l. 5-48 c. 11, l. 44-52 and l. 54-66 ----- | 1-15 | INV. G01S5/14 |
| A | US 5 266 958 A (DURBORAW III ISAAC N [US]) 30 November 1993 (1993-11-30) * the whole document * ----- | 1-15 | |
| A | US 2005/001762 A1 (HAN SHAOWEI [US] ET AL) 6 January 2005 (2005-01-06) * the whole document * ----- | 1-15 | |
| A | US 2003/085839 A1 (ZHODZISHKY MARK ISAAKOVICH [RU] ET AL) 8 May 2003 (2003-05-08) * the whole document * ----- | 1-15 | |

TECHNICAL FIELDS SEARCHED (IPC)

G01S

The present search report has been drawn up for all claims

| Place of search | Date of completion of the search | Examiner |
|---|---|---|
| Munich | 29 October 2007 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 0324

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2007

| Patent document cited in search report | | Publication date | Patent family member(s) | | Publication date |
|---|---|---|---|---|---|
| US 6366854 | B1 | 02-04-2002 | CA<br>JP<br>JP | 2312017 A1<br>3758917 B2<br>2001147263 A | 24-05-2001<br>22-03-2006<br>29-05-2001 |
| US 5266958 | A | 30-11-1993 | EP<br>JP | 0599014 A1<br>6213995 A | 01-06-1994<br>05-08-1994 |
| US 2005001762 | A1 | 06-01-2005 | EP | 1498745 A2 | 19-01-2005 |
| US 2003085839 | A1 | 08-05-2003 | NONE | | |

EPO FORM P0459

For more details about this annex : see Official Journal of the European Patent Office, No. 12/82

**EP 2 000 818 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HUGENTOBLER H. ; DACH R. ; FRIDEZ P. ; MEINDL M.** Bernese GPS Software 5.0. University of Bern, 2005
- **LEICK A.** GPS Satellite Surveying. John Wiley, 2004
- **SHEN X. ; GAO Y.** Kinematic Processing Analysis of Carrier Phase based Precise Point Positioning. University of Calgary, 2002
- **WELSCH W. ; HEUNECKE O. ; KUHLMANN H.** Auswertung geodätischer Ueberwachungsmessungen. Herbert Wichmann Verlag, 2000